Europäisches Patentamt

European Patent Office

Office européen des brevets

(11) Publication number: **0 173 300**
A1

## EUROPEAN PATENT APPLICATION

(21) Application number: 85110758.1

(22) Date of filing: 27.08.85

(51) Int. Cl.⁴: **D 21 H 1/34,** D 21 H 1/18, C 09 D 3/00

(30) Priority: 29.08.84 US 645476

(43) Date of publication of application: 05.03.86
Bulletin 86/10

(84) Designated Contracting States: **AT BE DE FR GB NL SE**

(71) Applicant: National Starch and Chemical Corporation, 10 Finderne Avenue Box 6500, Bridgewater New Jersey 08807 (US)

(72) Inventor: Gold, Samuel, 35 Parlin Lane, Watchung New Jersey 07060 (US)
Inventor: Mudge, Paul R., 440 Tall Oak Lane, Somerville New Jersey 08876 (US)
Inventor: Rosenski, Josephine M., 148 Jackson Avenue, North Plainfield New Jersey 07060 (US)

(74) Representative: Hagemann, Heinrich, Dr. et al, Patentanwälte GEYER, HAGEMANN & KEHL Postfach 860329, D-8000 München 86 (DE)

(54) **Aqueous surfactant-free base coating for metallized paper.**

(57) An improved aqueous base coating for paper substrates to be vacuum metallized consists essentially of an aqueous emulsion containing a film-forming polymer prepared by emulsion copolymerizing an acrylate monomer having a Tg of $-55°$ to $-70$ °C (e.g., butyl or 2-ethylhexyl acrylate) with selected vinyl polymerizable monomers having a Tg of about $+50°$ to $+110$ °C (e.g. methyl methacrylate, isobutyl methacrylate, styrene, or vinyl toluene) to give a polymer having a theoretical Tg of above $-10°$ to $+45$ °C. The polymerization is carried out in the presence of about 25–40 wt.% of a water-soluble colloid polymer having a Tg of $+14$ to $+80$ °C. The colloid polymer is the ammonium salt of an acid-containing polymer having a molecular weight of about 2000–10 000 which consists essentially of about 10–40% acrylic and/or methacrylic acid and about 60–90% of selected vinyl polymerizable monomers other than the acid monomer (e.g. styrene, butyl (meth)acrylate, isobutyl (meth) acrylate, methyl methacrylate and/or ethylene).

## AQUEOUS SURFACTANT-FREE BASE COATING FOR
## METALLIZED PAPER

This invention relates to improved aqueous base coatings for use on paper to be vacuum metallized. It also relates to the resulting improved metallized paper, such as bottle labels, prepared from the base coated paper and the process for their preparation.

As used herein, the term "paper" includes sheet-like masses made from the fibrous cellulosic materials which may be derived from both natural sources as well as from synthetics such as polyamides, polyesters, and polyacrylic resins and from mineral fibers such as asbestos and glass. In addition, papers made from combinations of cellulosic and synthetic materials are applicable herein. Paperboard is also included within the broad term "paper".

Vacuum evaporation or metallization is a process in which an "ultrathin" layer of metal is deposited on a substrate such as plastic, glass, paper, and the like to achieve a metallic surface appearance. The bright, glossy appearance of metallized papers have lead to their use as decorative wraps and labels. Metallizing directly on paper, however, results in a totally unacceptable material, i.e., a paper with a dull surface. This is due to the rough texture of the paper surface, and even the most highly finished papers have microscopically rough surfaces. Since the deposited metal adheres directly to the surface of the substrate being metallized and also since the resulting metal coating thickness is about 250-300 Angstroms, it isn't surprising that direct metal deposition on paper yields an unacceptable product.

Hence, the paper's surface is typically coated with a base coating which fills minor surface imperfections and provides a smooth surface to receive the metal deposit. Among the properties which are important in base coatings are adhesion, flake-resistance (i.e., resistance of the deposited metallized film to "flake off" or poor adhesion to the base coated paper when immersed in water for a period of 1-24 hours), water-resistance (up to and including pH 9), block-resistance (i.e., resistance to undesired adhesion between coated and uncoated surfaces such as that which occurs under moderate pressure or sometimes under pressure and heat), and alkali removability. While many of the base coatings currently used provide the smooth, hard but flexible surface needed to give a highly reflective surface when vacuum metallized, the metallized papers may be unsatisfactory in one or more of the following - block-resistance, flake-resistance, water-resistance, and alkali removability. Poor alkali-removability is a major disadvantage for glass bottle labels since, in the recycling of the bottles, the entire label (metallized surface and base coating(s), as well as papers) must be removed during treatment with a dilute hot alkali solution.

The prior art base coatings have included 100% solids coatings, solvent-based coatings (also referred to as lacquers), and aqueous-based coatings. The use of 100% solids coatings, which require curing using ultraviolet or electron beam radiation, is expensive and also is not cost effective since production rates are reduced. Solvent-based coatings suffer from the disadvantages inherent in the use of solvents, i.e., the high cost of the solvents and the fire hazard involved.

Their use may also result in excessive penetration into the paper or board stock and may also give blocking problems. There is an industry desire, therefore, to use aqueous-based coatings since they offer the advantages of lower cost, non-flammability, and versatility in end use.

The present aqueous coatings, i.e., aqueous coatings of solution polymers, surfactant-stabilized emulsion polymers, and many surfactant-free emulsion polymers, all suffer from some disadvantages. The disadvantages of aqueous solution polymers are their low molecular weight and poor water-, flake-, and block-resistance. Conventional surfactant-stabilized polymer emulsions exhibit excessive penetration into some paper stocks which results in poor gloss when metallized. The metallized papers are also poorer in water-resistance and flake-resistance. Surfactant-free emulsions stabilized with emulsifying colloids, such as polyvinyl alcohol and cellulosics, provide coatings that meet some of the desired end use properties; however, the polymer coatings may be too soft and moisture-sensitive, and the metallized paper would then have poor gloss, water-resistance and/or flake-resistance.

There is, therefore, a need for improved aqueous base coatings for use on paper to be vacuum metallized.

The present invention provides an improved aqueous base coating for paper substrates to be vacuum metallized, which consists essentially of an aqueous emulsion containing an effective amount (e.g., 20-50% by weight) of a film-forming polymer prepared by emulsion copolymerizing an acrylate monomer having a Tg of -55° to -70°C (e.g., butyl acrylate or 2-ethylhexyl acrylate) with a vinyl polymerizable monomer having a Tg of +50° to +110°C (e.g., methyl methacrylate, isobutyl methacrylate, styrene, or vinyl toluene) to give an acrylate-containing polymer having a theoretical Tg of above -10° to +45°C, the polymerization being carried out in the presence of 25-40% by weight, based on the weight of the monomers, of a water-soluble colloid polymer having a Tg of +14 to +80°C, the colloid polymer being the ammonium salt of an acid-containing polymer having a number average molecular weight of about 2000-10,000 and consisting essentially of 10-40% of acrylic acid, methacrylic acid, or mixtures thereof and 60-90% of a vinyl polymerizable monomer other than an acid monomer (e.g., styrene, butyl·acrylate, butyl methacrlate, isobutyl acrylate, isobutyl methacrylate, methyl methacrylate, and/or ethylene), the monomer percentages being by weight and totaling 100%.

Preferably the acrylate-containing polymer comprises 35-50% butyl acrylate or 2-ethylhexyl acrylate and 50-65% styrene, methyl methacrylate, isobutyl acrylate or mixtures thereof, the percentages being be weight and totaling 100%. The acrylate-containing polymer preferably has a Tg of above -5° to +15°C.

Preferably the colloid polymer contains 14-35% acrylic acid and 65-86% styrene, butyl (meth)acrylate, methyl methacrylate and mixtures thereof. The colloid polymer preferably has a Tg of +30° to +80°C, most preferably +80°C, and a molecular weight of 2000-6000, most preferably 3000.

Salts of the colloid polymer other than the ammonium salt can not be used. It is necessary that the salt contain a fugitive alkali so that the colloid polymer, after film formation, will not be water-soluble and as a result cause the base coating to be water-sensitive.

The resulting composite polymer in the aqueous emulsion has a small particle size and may have a bimodal Tg, i.e., the Tg for the resulting polymer particles is a composite of the Tg of the colloid polymer used as a stabilizer in the emulsion polymerization and the Tg of the acrylate-containing polymer. The theoretical Tg values of the acrylate-containing polymers and the theoretical and actual Tg values of the colloid polymers are reported herein. It is possible to demonstrate the bimodal Tg by thermogravimetric analysis where there is a measurable difference between Tg values for the acrylate polymer and colloid polymer. The composite is believed to consist of a soft inner core of the acrylate-containing polymer (e.g., butyl acrylate/methyl methacrylate in a ratio of 50-60/ 50-40% by weight) and a harder outer shell of the colloid polymer, which preferably has a Tg of +30° to +80°C, most preferably +80°C. However, the components of the composite may both have the same Tg (e.g., +25°C). When both components have a high Tg it may be necessary to use a known coalescing solvent or to use a higher curing temperature to insure good film formation. Suitable coalescents are well-known in the art and include solvents such a butoxy ethylene glycol acetate (sold under the trade name Butyl Cellosolve Acetate by Union Carbide Corp.), dipropylene glycol monomethyl ether (sold under the trade name Dowanol PM by Dow Chemical Co.), or diethylene glycol ethyl ether (sold under the trade name Ethyl Carbitol by Union Carbide Corp.).

Use of the surfactant-free aqueous coatings of the emulsion polymers herein provides base coatings that are characterized by a balanced combination of desirable properties - namely alkali removability, water-resistance (especially at pH 9), block-resistance, flake-resistance, excellent gloss, and good metal adhesion. The improvements in the base coatings are affected by including the selected acid comonomers in the colloid polymer to impart the required balance of alkali removability and water-resistance and by carrying out the polymerization of the core material in the presence of a large amount of the colloid polymer (e.g.,

20-40 wt. %) to provide surfactant-free polymer emulsions. The use of conventional colloids such as polyvinyl alcohol results in a polymer emulsion which does not have good coating properties. The use of the acid-containing colloid polymer as an emulsifying agent also contributes to the high gloss by improving the coating hold-out (i.e., the ability of the coating to minimally penetrate the substrate). The amount of acid in the polymer is important in providing good flake-resistance (the use of too much acid or the use of acids other than acrylic or methacrylic acid makes the coating water-sensitive).

The resulting aqueous emulsions are useful on all types of paper (e.g., clay coated ground wood, wet strength paper, litho label stock) as well as paperboard (e.g., bleached sulfate board stock and clay coated board stock). The water-resistance and flake-resistance of basecoated papers which are poor in wet strength can be improved by including crosslinking agents such as a multifunctional polyaziridine (sold under the trade name XAMA-2 from Cordova Chemical Co.), ammonium zirconium carbonate, or a polyamide-epichlorohydrin adduct. Such crosslinking agents are well-known in the art. Metallized papers prepared with the coatings herein were better than papers coated with aqueous surfactant-stabilized emulsions or conventional surfactant-free emulsions. They were comparable to or better than papers coated with lacquer coatings containing resins for improving the block resistance.

The improved metallized paper herein is prepared by coating the surface of the paper substrate to be metallized with the base coating, drying the coated paper, and vacuum metallizing (typically aluminizing) the surface of the dried, coated paper substrate. The coating, drying and vacuum metallizing are carried out using conventional means well-known to those skilled in the art. The coating weight should be sufficient to provide a smooth, continuous base coating. With the more porous papers it may be desirable to precoat the paper substrate prior to application of the base coating herein. The drying conditions should be sufficient to insure substantially complete removal of the water and the fugitive alkali from the colloid polymer salt.

The metallized papers herein are particularly suited for bottle labels due to their alkali removability and water-resistance. Since the coated paper is water-resistant, the labels will remain on the bottles when they are immersed in tap water (typically about pH 7-9), but will be easily, rapidly, and completely removed during recycling by washing in dilute hot alkaline solutions.

The surfactant-free aqueous emulsions herein are prepared in two steps. In the first step the colloid polymer is prepared by solution polymerizing the acrylic and/or methacrylic acid monomer and other vinyl polymerizable monomer in a solvent or solvent-water mixture to form a low molecular weight, alkali-soluble polymer. The solution polymer is then neutralized with a fugitive alkali (e.g., aqueous ammonium hydroxide) to give a water-soluble polymer salt. The preparation of the colloid polymers is described in Brit. Pat. No. 1,107,249 (published 3/27/68 and assigned to S.C. Johnson and Son Inc.). In the second step the water soluble colloid polymer salt is then used as the sole emulsifier in the preparation of the acrylate-containing emulsion polymer.

The aqueous emulsions containing the composite polymers (i.e., colloid polymer and acrylate-containing emulsion polymer) are unique in two ways - they contain no surfactants and they contain high levels of colloid polymer (20-40 parts per 100 parts of polymer).

The emulsion polymerization is carried out in a conventional manner. In the emulsion polymerization an initiator such as a redox initiator (e.g., hydrogen peroxide and sodium metabisulfite) or a thermal initiator (e.g., persulfates) is used.

The actual use of the aqueous base coating compositions herein on paper substrates which are to be metallized may be accomplished by any technique capable of depositing a smooth, continuous resin film upon the surface of the paper substrate. The preferred procedures for the deposition of the coating are reverse roll and gravure. The coating weight required to form a suitable metallizable base coat may vary depending upon the substrate. It may also depend upon whether the substrate has been precoated and whether or not it is porous. The dry coating should be sufficiently thick to cover substantially all fibrous paper material projecting from the surface. Typically, for a precoated substrate from 0.91-2.7 kg./278.7 m.$^2$ (2-6 lbs./3000 ft.$^2$) is required, with the optimum being 0.91-1.4 kg./278.7 m.$^2$ (2-3 lbs./3000 ft.$^2$), which may deposited in one or more applications. For an uncoated substrate from 0.91-3.63 kg./278.7 m.$^2$ (2-8 lbs./3000 ft.$^2$) is required, with the optimum being 1.4-1.8 kg./278.7 m.$^2$ (3-4 lbs./3000 ft.$^2$).

It may be desirable to precoat the paper substrate prior to the application of the base coating herein. This may reduce the amount of coating composition required and it can prevent excessive penetration of the base coating into the body of an excessively porous substrate. In addition, the precoat may tend to provide a smoother surface, which will affect the gloss of the metallized coating (the smoother the surface, the better the gloss). Among the applicable materials which may be used for a precoat are various synthetic polymer latices used alone or in combination with pigments such as clay, calcium carbonate, and titanium dioxide. Water-soluble colloids such as starch, alginates, casein, and polyvinyl alcohol can be used in combination with the above pigments as well as in combination, as a co-binder for pigments, with various synthetic polymer latices. The precoat may be applied by means of any conventional coating apparatus, as well as by size press and from water boxes of a calender stack.

Suitable paper substrates for use herein include both heavy and thin paper stocks, for example, bleached and unbleached sulfate (Kraft), bleached and unbleached sulfite, bleached and unbleached soda, neutral sulfite, semi-chemical and chemical groundwood, groundwood, and the like. The preferred substrates for metallized bottle labels include those with a clay coating or wet strength.

The actual metallization of the base coated paper substrates may be accomplished, after the coating composition has been dried, by any conventional means. Preferably, the coated substrate is hot air dried for 0.5-2 minutes at 93-177°C (200-350°F) with higher temperatures requiring shorter times. It may be air dried at room temperature for an extended period of time. The drying time will vary depending upon the thickness of the base coating. It is important to remove residual water otherwise problems such as picking or blocking may develop.

The dried, coated paper substrate is then vacuum metallized. Vacuum metallization is well-known and the detailed procedures will be apparent to those skilled in the art. A review of vapor deposition techniques may be found in "Vapor Deposition," C.F. Powell, J.H. Oxley, and J.M. Blocker, Jr., eds., John Wiley & Sons, Inc., New York (1966). Typically, the coated paper substrate is unwound, exposed to the metallizing source under high vacuum, and rewound. The optimum vacuum level will depend upon the coating material and most often is $10^{-4}$ Torr. or less. The particular metal chosen will vary with the requirements of the practitioner. Suitable metals include zinc, cadmium, copper, silver, gold, and for bottle labels preferably aluminum. Evaporation sources which can be used in single or multiple chambers include an oven with indirectly heated crucibles, an intermetallic boat heated by direct current, inductive evaporation, electron beam evaporation, and sputtering.

In the examples which follow, all parts and percentages are given by weight and all temperatures are in degrees Celsius unless otherwise noted. The following testing procedures were used in the laboratory for a preliminary evaluation of the base coatings.

### 70° Specular Gloss

This test is used to measure the gloss of the substrate. Gloss is the ratio of reflected light to incident light. The measurement is carried out using the ASTM Standard Test Method For Specular Gloss (ASTM D 523 - 80) using the 70° geometry. Higher readings indicate better gloss.

### Block-Resistance

This test determines the resistance to blocking of any two surfaces. The dried, coated paper substrate is cut to fit aluminum plates (1 x 1 7/64 x 1/16 in. - 2.54 x 2.58 x 0.16 cm.) and placed face to back between two aluminum plates. The assembled specimen is placed on a glass plate, weighted with a 2000 g. weight on the top (0.4 kg./cm.$^2$- 5 lbs./in.$^2$) and heated in an oven at about 60°C. (140°F.) for 16 hrs. After removal from the oven, the weight is removed and the assembled specimen is allowed to cool to room temperature before being slowly peeled apart to check for blocking (i.e., sticking). The block-resistance is rated on a scale from 0-10, with highest value indicating excellent block-resistance. The values are determined and rated as follows:

10 - Panels fall apart.
 8 - Papers pull apart with very little effort; surface is unmarred.
 6 - Papers pull apart with some effort; surface is unmarred.
 4 - Papers pull apart with some effort; surface is mottled.
 2 - Papers pull apart with effort; surface is marred and up to 20% can not be separated.
 0 - Papers can not be pulled apart.

## Caustic Penetration

This test, which determines the amount of caustic solution that penetrates the coating, is used to approximate alkali removability. Pieces of the dried, coated paper samples (4 x 4 in. - 10.16 x 10.16 cm.) are taped to glass plates. Using an eye dropper, 5 drops of heated caustic (4% aqueous sodium hydroxide at 60°C-140°F.) are placed in 3 spots on each paper sample. The time required for 100% penetration is recorded. Times less than 3 min. are excellent.

## Water Penetration at pH 9

This test, which studies the effect on the base coating of water at pH 9, is used to approximate the water-resistance of the base coating. The test determines the amount of water that penetrates the base coating. It is carried out as above except a buffered aqueous solution (pH 9) at room temperature is used. The samples are allowed to stand for 1 hr. before the surface is blotted dry and visually evaluated after turning over the glass plates. The penetration is rated as a percentage of surface wetness (average wet area of 3 spots). The less the penetration, the better the water-resistance. The % penetration and corresponding ratings are as follows:

| % Penetration | Rating |
| --- | --- |
| 0% | perfect |
| 20% | excellent |
| 40% | good |
| 60% | fair |
| 80% | poor |
| 100% | failed |

## Flake-Resistance

This test, which determines the resistance to flaking of the metallized paper after water soaking, is used as an indication of metal adhesion. The metallized paper sample (4 x 4 in. - 10.16 x 10.16 cm.) is placed in a jar of distilled water for 1 hr. After removal, the metallized surface is rubbed 15-20 times using even thumb pressure. It is then dried with a blotter and examined for any flaking (if necessary using a magnifying glass). The ratings are as follows:

, 10 - No flaking
8 - Slight flaking
5 - Moderate flaking
3 - Severe flaking

## EXAMPLE I

This example describes the preparation of the surfactant-free aqueous polymer emulsions.

### Part A - Preparation Of The Colloid Polymers

Colloid A, a 65% styrene (S)/35% acrylic acid (AA) polymer was prepared by charging 20 g. tertiary butyl peroxide in 1000 g. propylene glycol monomethyl acetate, also referred to as methoxy propylene glycol acetate, (sold by Dow Chemical Co. under the trade name Dowanol PM Acetate) to a 3 l. 4-necked flask equipped with a stirrer, nitrogen purge inlet, condenser, and addition funnels. The charge was heated to reflux temperature (140-145°C), and a monomer charge of 650 g. styrene and 350 g. of acrylic acid was added concurrently with additional teritary butyl peroxide (60 g.) over a period of 4 hr. The mixture was held for 1 hr. after completion of the monomer and initiator addition. The solvent was then removed by distillation at high temperature (150-160°C) to leave a molten polymer containing 5-10% residual propylene glycol monomethyl acetate. On cooling this yielded a solid brittle resin. The resin was then dissolved in ammonia water to give a 25% solids solution with a viscosity in the range of 50-100 cps. at room temperature (about 25°C).

Colloid B, a 43% isobutyl methacrylate (IBMA)/43% methyl methacrylate (MMA)/14% acrylic acid (AA) polymer, was prepared by charging 20 g. teritary butyl peroctoate in 230 g. isopropanol to a flask equipped as above. The charge was heated to reflux temperature (80-84°C), and a monomer charge of 430 g. IBMA, 430 g. MMA, and (1.89 moles) 140 g. (1.89 moles) AA was added concurrently with addition of tertiary butyl peroctoate (30 g.) over a 4 hr. period. The mixture was held for 1 hr. after completion of the monomer and initiator addition and then cooled to 50°C. The polymer was then rendered water soluble by adding a charge of 225 g. (3.5 moles) ammonium hydroxide solution (about 27-30% active $NH_3$) and 1775 g. water. The resulting polymer solution was a water-white viscous solution (viscosity about 5000 cps.) at 50% active solids which was completely miscible with water. The resulting colloid polymer had a molecular weight in the range of 3000-5000 (4000 average).

Colloid C, a 43% butyl acrylate (BA)/43% methyl methacrylate (MMA)/14% acrylic acid (AA) polymer, was prepared in the same manner as Colloid B. The molecular weight of the resulting colloid polymer was in the same range.

Colloid D, an 80% ethylene (E)/20% acrylic acid (AA) polymer, is available from Dow Chemical Corp. It is known as Dow EAA Dispersible Resin 433 (a solid) or 483 (an aqueous dispersion). It is reported to have a Vicat softening point of about 50°C (i.e., actual Tg) and crystalline melting point of about 85°C. The solid resin was dissolved in ammonia water to give a 25% solids solution having a viscosity in the range of 100-200 cps. at room temperature.

The actual and theoretical $T_g$ values for colloid polymers A, B, and C are given below.

### Part B - Preparation Of The Surfactant-Free Aqueous Polymer Emulsion

The following charges were prepared:

A - 620 g. of the Colloid A polymer solution, 5 g. ammonium hydroxide solution (30% active), 2 g. tertiary butyl hydroperoxide (70% active), 25 g. styrene and 25 g. butyl acrylate in 890 g. of water.
B - 2 g. sodium metabisulfite in 195 g. water.
C - 500 g. butyl acrylate (BA), 500 g. styrene (S), and 1 g. tertiary butyl hydroperoxide.

Charge A was introduced to a reaction vessel equipped as above and the contents were purged with nitrogen. The temperature was raised to 65°C and then charge B was slowly added over 4.5 hr. Once the reaction mixture reached 75°C., charge C was added slowly over 3.5 hr. while the temperature was maintained at 75°C. After the addition of charge B was completed, the contents were cooled to 30°C and the active solids diluted to 45% by dilution with water.

Using the above aqueous emulsion polymerization procedure and the indicated colloid polymer, additional surfactant-free aqueous emulsions were prepared using butyl acrylate (BA) or 2-ethylhexyl acrylate (2-EHA) with styrene (S), methyl methacrylate (MMA), and/or isobutyl methacrylate (IBMA). The monomer amounts were adjusted to give the weight percentages indicated. The theoretical Tg values for the polymers are indicated below.

| Emulsion No. | Colloid Polymer | | | Acrylate Polymer | |
| | Composition* | Tg(°C) Actual | Tg(°C) Theoretical | Composition (wt. %) | Tg(°C) Theoretical |
| --- | --- | --- | --- | --- | --- |
| 1 | A | +80 | +103 | 50% BA/50% S | +1 |
| 2 | A | +80 | +103 | 45% BA/55% S | +9 |
| 3 | A | +80 | +103 | 35% BA/65% S | +25 |
| 4 | A | +80 | +103 | 55% BA/45% S | -6 |
| 5 | A | +80 | +103 | 45% BA/55% MMA | +10 |
| 6 | A | +80 | +103 | 40% 2-EHA/60% MMA | +7 |
| 7 | A | +80 | +103 | 40% 2-EHA/60% S | +6 |
| 8 | A | +80 | +103 | 40% 2-EHA/30% MMA/30% S | +6 |

| Emulsion No. | Colloid Polymer | | | Acrylate Polymer | |
|---|---|---|---|---|---|
| | Compo-sition* | Tg(°C) Actual | Tg(°C) Theoretical | Composition (wt. %) | Tg(°C) Theoretical |
| 9 | B | +31 | +65 | 50% BA/50% MMA | +2 |
| 10 | B | +31 | +65 | 50% BA/25% MMA/25% S | +2 |
| 11 | B | +31 | +65 | 50% BA/25% MMA/25% IBMA | -6 |
| 12 | C | +14 | +19 | 43% BA/57% MMA | +13 |
| 13 | D | +50 | -72° | 60% MMA/40% 2-EHA | +6 |

*A was 65% S and 35% AA; B was 43% IBMA, 43% MMA, and 14% AA; and C was 43% MMA, 43% BA, and 14% AA.

## EXAMPLE II

The resulting emulsions which had solids contents of about 49% can be diluted with water to about 20-25% solids and used as a base coating for various papers. Using a wire wound rod, a thin wet film of the diluted emulsion was applied to one side of a paper sheet. The coated paper was air-dried and then oven-dried for 5 min. at 100°C unless indicated otherwise. The coatings were made at 1.1 kg./278.7 m.$^2$ (2.5 lb./3000 ft.$^2$). The dry base coated paper was evaluated. The results for the indicated emulsions are shown in Table I. For comparison a vinyl acetate lacquer coating containing an anti-blocking additive was evaluated. Comparable results are expected with the aqueous surfactant-free emulsions of Example I which were not evaluated. The following papers were coated:

No. 1 - Clay coated groundwood commonly known as No. 5 publication grade (basis weight of 18-20 kg. - 40-45 lb.)
No. 2 - Wet strength label stock commonly used in Europe (basis weight of 22 kg. - 48 lb.)
No. 3 - Litho label stock paper supplied by Newton Falls Paper Co. (basis weight of 25 kg. - 55 lb.)
No. 4 - Bleached sulfate board stock supplied by Potlach (basis weight of 82 kg. - 180 lb.)
No. 5 - Clay coated board stock supplied by Champion (basis weight of 122 kg. - 270 lb.)

TABLE I

| Aqueous Surfactant-Free Emulsion | Paper No. | 70° Gloss | Block Resistance | Caustic Removability (sec.) | pH 9 Water Resistance (%) |
|---|---|---|---|---|---|
| No. 1 | 1 | 78 | 10 | 5 | 0 |
|  | 2 | 80 | 10 | 10 | 0 |
|  | 3 | 84 | 10 | 10 | 0 |
|  | 4 | 90 | 10 | 10 | 0 |
|  | 5 | 92 | 10 | 20 | 0 |
| No. 3[a] | 1 | 74[b] | 10 | 5 | 100[b] |
|  | 2 | 78[b] | 10 | 5 | 0[b] |
|  | 3 | 82[b] | 10 | 5 | 40[b] |
| No. 5 | 1 | 86 | 10 | 5 | 0[c] |
|  | 2 | 88 | 10 | 10 | 0[d] |
|  | 3 | 84 | 10 | 10 | 0[d] |
|  | 4 | 96 | 10 | 10 | 0[d] |
|  | 5 | 94 | 10 | 10 | 0[d] |
| No. 6 | 1 | 80 | 10 | 5 | 0 |
|  | 2 | 82 | 10 | 5 | 0 |
|  | 3 | 78 | 10 | 5 | 0 |
|  | 4 | 84 | 9 | 5 | 0 |
|  | 5 | 90 | 10 | 10 | 0 |
| No. 7 | 1 | 88 | 10 | 5 | 0[c] |
|  | 2 | 88 | 10 | 10 | 0[d] |
|  | 3 | 88 | 9 | 10 | 0 |
|  | 4 | 92 | 9 | 10 | 0[d] |
|  | 5 | 94 | 10 | 10 | 0[c] |
| No. 8 | 1 | 76 | 10 | 5 | 0 |
|  | 2 | 82 | 10 | 5 | 20 |
|  | 3 | 86 | 10 | 5 | 20 |
|  | 4 | 96 | 9 | 5 | 0 |
|  | 5 | 94 | 10 | 5 | 0 |
| No. 9 | 1 | 82 | 10 | 5 | 0 |
|  | 2 | 82 | 10 | 10 | 0 |
|  | 3 | 80 | 9 | 10 | 0 |
|  | 4 | 92 | 10 | 20 | 60 |
|  | 5 | 94 | 5 | 20 | 100 |

TABLE I - (continued)

| Aqueous Surfactant-Free Emulsion | Paper No. | 70° Gloss | Block Resistance | Caustic Removability (sec.) | pH 9 Water Resistance (%) |
|---|---|---|---|---|---|
| No. 10 | 1 | 86 | 10 | 5 | 0 |
| | 2 | 88 | 8 | 10 | 0 |
| | 3 | 84 | 9 | 10 | 0 |
| | 4 | 96 | 10 | 20 | 20 |
| | 5 | 94 | 10 | 20 | 40 |
| No. 11 | 1 | 74 | 10 | 5 | 0 |
| | 2 | 86 | 8 | 10 | 0 |
| | 3 | 78 | 9 | 10 | 0 |
| | 4 | 90 | 10 | 20 | 60 |
| | 5 | 88 | 10 | 5 | 100 |
| No. 12 | 1 | 78 | 8 | 5 | 0 |
| | 2 | 84 | 10 | 10 | 0 |
| | 3 | 78 | 9 | 10 | 0 |
| | 4 | 88 | 10 | 20 | 0 |
| | 5 | 90 | 10 | 20 | 0 |
| Vinyl Acetate (Solvent coating) | 1 | 82 | 10 | 10 | 0 |
| | 2 | 84 | 10 | 10 | 0 |
| | 3 | 84 | 7 | 10 | 0 |
| | 4 | 96 | 10 | 10 | 0 |
| | 5 | 92 | 8 | 10 | 0 |

a. Emulsion contained 5% butyl cellosolve acetate as a coalescent.
b. Wet film was applied as a double pass. The first coating was flash-dried and the substrate was recoated and oven-cured for 2 min. at 149°C (300°F).
c. Wet film was applied as in b. but oven-cured for 2 min. at 124°C (255°F).
d. Wet film was not air dried prior to curing at 124°C.

The results for samples coated with emulsions Nos. 1, 5, 6, 7 and 8 show that all of the base coated papers had good gloss indicating that an acceptably smooth glossy metallic finish can be expected. The block resistance was excellent. The caustic removability was excellent for all the paper bases. The water resistance was excellent on most of the papers when air-dried prior to the final heating; however, for some polymer composites it was necessary to heat the coating immediately to fuse (i.e., form) the film or to use a double pass followed by immediate heating to insure good film formation. The papers coated with the surfactant-free aqueous coatings were comparable to the solvent based vinyl acetate coating which contained a resin to improve the block resistance.

The results for the samples coated with emulsions Nos. 9-12 show that the polymers stabilized with lower Tg colloids provided satisfactory base coatings with excellent gloss, flexibility, good to excellent block resistance, and excellent alkali removability. The water resistance was excellent on all paper stocks normally used for labels and only fair on most of the clay-coated board stocks. It should be possible to improve the water-resistance by using a harder colloid polymer (i.e., Tg of +80°C) or by using a double pass or immediate heat curing as was done with Nos. 5 and 7.

<div align="center">EXAMPLE II</div>

This example shows that papers coated with conventional aqueous polymer emulsions that were stabilized with a surfactant or conventional colloid were deficient in one or more properties. The surfactant-free aqueous emulsion designated No. 1 (50% BA/50% S polymer with a theoretical Tg of +1°C stabilized with the +80°C Tg colloid) is included for comparison. The coatings and paper results are shown in Table II.

TABLE II

| Polymer | Paper No. | 70° Gloss | Block Resis- tance | Caustic Remov- ability (sec.) | pH 9 Water Resis- tance (%) | Flake Resis- tance* |
|---|---|---|---|---|---|---|
| Surfactant-free aqueous polymer emulsion No. 1 of Example I - 50% BA/ 50% S (Tg of +1°C) stabilized with colloid polymer of 65% S/35% AA (Tg of +80 °C) | 1 2 3 | 78 80 84 | 10 10 10 | 5 10 10 | 0 0 0 | 8 10 8 |
| Surfactant-free aqueous polymer emulsion of Vinyl Acetate (Tg of +29°C) stabilized with polyvinyl alcohol (comparative) | 1 2 3 | 18 20 18 | 8 8 8 | 10 10 10 | 100 60 100 | 2 4 4 |
| Sufactant-stabilized aqueous polymer emulsion of 30% MMA/20% S/45% BA/5% MAA (Tg of +20°C) stabilized with sodium lauryl sulfate surfactant (comparative) | 1 2 3 | 50 82 78 | 0 0 0 | 5 5 5 | 20 0 20 | 6 6 6 |

*After vacuum metallization with aluminum.

The results show that the vinyl acetate polymer that contained no plasticizing monomer (i.e., acrylate) and that was prepared with a colloid stabilizer (polyvinyl alcohol) was very poor in gloss and also poor in water resistance and flake resistance. The surfactant-stabilized methyl methacrylate/styrene/butyl acrylate/methacrylic acid polymer was better in gloss but unsatisfactory in block resistance. Only the surfactant-free aqueous polymer emulsion of the present invention, which is stabilized with the colloid polymer, was satisfactory in gloss, water resistance, and flake resistance.

In summary, the present invention provides improved aqueous base coatings for paper substrates that are to be vacuum metallized.

WHAT IS CLAIMED IS:

1. An aqueous coating, which consists essentially of a surfactant-free aqueous emulsion containing a film-forming polymer composite prepared by emulsion copolymerizing an acrylate monomer having a theoretical $T_g$ of -55° to -70°C with a vinyl polymerizable monomer having a theoretical $T_g$ of +50° to +110°C selected from the group consisting of a methacrylate ester, styrene, or styrene derivative to give an acrylate-containing polymer having a theoretical $T_g$ of above -10° to +45°C, the polymerization being carried out in the presence of 25-40% by weight, based on the total weight of the monomers, of a fully neutralized colloid polymer soluble in water and having an actual $T_g$ of +14° to +80°C, the colloid polymer being an ammonium salt of an acid-containing polymer having a number average molecular weight of 2000-10,000 and consisting essentially of 10-40% by weight of acrylic acid, methacrylic acid, or mixtures thereof and 60-90% of a vinyl polymerizable monomer selected from the group consisting of an acrylate ester, methacrylate ester, styrene, styrene derivative, and ethylene, the monomer percentages being by weight and totaling 100%, the polymer composite being present in the aqueous coating in an amount sufficient to form a film coating on a paper substrate as a base coating for vacuum metallization; the vacuum metallized base coating being characterized by a balanced combination of alkali removability, waterresistance, blockresistance, gloss, and metal adhesion.

2. An aqueous coating, which consists essentially of a surfactant-free aqueous emulsion containing a film-forming polymer composite prepared by emulsion copolymerizing an acrylate monomer having a theoretical $T_g$ of -55° to -70°C with a vinyl polymerizable monomer having a theorical Tg of +50° to +110°C selected from the group consisting of a methacrylate ester, styrene, or styrene derivative to give an acrylate-containing polymer having a theoretical $T_g$ of above -10° to +45°C, with the proviso that the acrylate-containing polymer is not a polymer of 43% butyl acrylate and 57% methyl methacrylate, the polymerization being carried out in the presence of 25-40% by weight, based on the total weight of the monomers, of a fully neutralized colloid polymer soluble in water and having an actual $T_g$ of +14° to +80°C, the colloid polymer being an ammonium salt of an acid-containing polymer having a number average molecular weight of 2000-10,000 and consisting essentially of 10-40% by weight of acrylic acid, methacrylic acid, or mixtures thereof and 60-90% of a vinyl polymerizable monomer selected from the group consisting of an acrylate ester, methacrylate ester, styrene, styrene derivative, and ethylene, the monomer percentages being by weight and totaling 100%, with the proviso that the colloid polymer is not a polymer of 43% butyl acrylate, 43% methyl methacrylate, and 14% acrylic acid; the polymer composite being present in the aqueous coating in an amount sufficient to form a film coating on a paper substrate as a base coating for vacuum metallization; the vacuum metallized base coating being characterized by a balanced combination of alkali removability, waterresistance, blockresistance, gloss, and metal adhesion.

3. The coating of Claim 1, wherein the polymer composite is present in an amount of 20-50% by weight and wherein the acrylate monomer is butyl acrylate or 2-ethylhexyl acrylate and the acrylate-containing polymer has the Tg of above -10° to +25°C.

4. The coating of Claim 3, wherein the acrylate-containing polymer has the $T_g$ of about -5° to +15°C and comprises 35-50% of the acrylate monomer and 50-65% of the vinyl polymerizable monomer, the vinyl polymerizable monomer being selected from the group consisting of styrene, methyl methacrylate, isobutyl methacrylate and mixtures thereof.

5. The coating of Claim 4, wherein the acrylate-containing polymer is 45% butyl acrylate and 55% methyl methacrylate; 50% butyl acrylate and 50% methyl methacrylate; 40% 2-ethylhexyl acrylate and 60% styrene; 40% 2-ethylhexyl acrylate and 60% methyl methacrylate; 50% butyl acrylate, 25% methyl methacrylate, and 25% styrene; 50% butyl acrylate, 25% methyl methacrylate, and 25% isobutyl methacrylate; or 40% 2-ethylhexyl acrylate, 30% methyl methacrylate, and 30% styrene, the acrylate- containing polymers having a $T_g$ of -6 to +25°C.

6. The coating of Claim 1, wherein the colloid polymer has a $T_g$ of +30° to +80°C and molecular weight of 2000-6000.

7. The coating of Claim 6, wherein the colloid polymer is 14% acrylic acid 43%, isobutyl methacrylate, and 43% methyl methacrylate; 35% acrylic acid and 65% styrene; or 20% acrylic acid and 80% ethylene.

8. The coating of Claim 1, wherein the film-forming polymer composite consists essentially of the acrylate-containing polymer of 40-50% butyl acrylate or 2-ethylhexyl acrylate and 50-60% of styrene, methyl methacrylate, isobutyl methacrylate, or mixtures thereof having a $T_g$ of -10° to +15°C and of the colloid polymer which is the ammonium salt of 10-40% of acrylic acid or methacrylic acid and 60-90% of styrene, butyl acrylate, butyl methacrylate, isobutyl acrylate, isobutyl methacrylate, methyl methacrylate, ethylene and mixtures thereof, the colloid polymer having a $T_g$ of +30 to +80°C.

9.    The coating of Claim 8, wherein the acrylate-containing polymer has a $T_g$ of -5° to +10°C and the colloid polymer has a $T_g$ of about +80°C and a molecular weight of about 3000.

10.    In a process for the vacuum metallization of a paper substrate, wherein the paper substrate is passed into a high-vacuum metallization chamber in which a metallic vapor is deposited upon the paper substrate, the steps of:

    (a)  first applying, to a surface of the paper substrate to be metallized, a coating of the aqueous base coating of Claim 1 in an amount sufficient to form a continuous, smooth film of said polymer composite sufficient to cover substantially all fibrous paper material projecting from said surface;

    (b)  drying said coated paper substrate to substantially remove said water and ammonia from said ammonium salt; and

    (c)  metallizing the surface of said dried, coated paper substrate.

11 . A metallized paper product, which comprises a paper substrate coated on at least one side thereof with a smooth, continuous coating of the aqueous base coating of Claim 1, dried, and overcoated with a thin metallic layer applied by vacuum metallization.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,Y | US-A-4 151 143 (W.J. BLANK et al.) <br> * Whole document * | 1-7 | D 21 H 1/34 <br> D 21 H 1/18 <br> C 09 D 3/00 |
| X,Y | CHEMICAL ABSTRACTS, vol. 98, no. 14, 4th April 1983, page 85, no. 108966g, Columbus, Ohio, US; & JP - A - 57 145 102 (TOA GOSEI CHEMICAL INDUSTRY CO., LTD.) 08-09-1982 | 1-3,5, 7,8,10 ,11 | |
| Y | GB-A-2 053 283 (MITSUI PETROCHEMICAL IND.) <br> * Claims 1-5,8,9,11-14,17-20,24,25,28,29,31-34; pages 2-5, in particular page 4, lines 14-17 * | 1,10, 11 | |
| A | GB-A-1 555 868 (M. & T. CHEMICALS) | | |

TECHNICAL FIELDS SEARCHED (Int. Cl.4)

C 09 D
D 21 H

The present search report has been drawn up for all claims

| Place of search <br> THE HAGUE | Date of completion of the search <br> 20-11-1985 | Examiner <br> NESTBY K. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82